# EUROPÄISCHE PATENTSCHRIFT

(11) **EP 0 530 598 B1**
(45) Veröffentlichungstag und Bekanntmachung des Hinweises auf die Patenterteilung: **08.05.1996**
(21) Anmeldenummer: 92114196.6
(22) Anmeldetag: 20.08.1992
(51) Int. Cl.: C01F 7/56, C01F 7/64

(54) **Verfahren zur Herstellung von Aluminiumhydroxychlorid und/oder -bromid**
Process of preparation of basic aluminium chloride and/or bromide
Procédé de préparation de chlorure et/ou aluminium basique

(30) Priorität: 04.09.1991 DE 4129328
(43) Veröffentlichungstag der Anmeldung: 10.03.1993
(73) Patentinhaber: Deutsche Solvay-Werke Gesellschaft mit beschränkter Haftung, 30173 Hannover (DE)
(72) Erfinder: Dillenburg, Helmut, Dr., W-4134 Rheinberg (DE); zum Hebel, Peter, Dr., W-4234 Moers (DE); Helgers, Michael, W-4232 Xanten (DE)
(74) Vertreter: Lauer, Dieter, Dr.

(56) Entgegenhaltungen:
- EP-A- 0 191 628
- DE-A- 2 048 273
- Ullmann's Encyclopedia of Industrial Chemistry, 5. Auflage, Band A1, Seite 540

## Beschreibung

Die vorliegende Erfindung betrifft ein Verfahren zur Herstellung von Aluminiumhydroxychlorid und/oder Aluminiumhydroxybromid hoher Basizität durch Umsetzung einer wäßrigen Lösung eines Aluminiumhalogenids und/oder eines niedrigbasischen Aluminiumhydroxyhalogenids mit Aluminium unter Erwärmung sowie die Verwendung des nach diesem Verfahren hergestellten katalysatorfreien Aluminiumhydroxychlorids und/oder -bromids in kosmetischen oder pharmazeutischen Zubereitungen.

Aluminiumhydroxyhalogenide (basische Aluminiumhalogenide) sind seit mehreren Jahren als aktive Bestandteile in antitranspiranten Formulierungen bekannt. Es handelt sich dabei um Aluminiumhydroxychloride oder -bromide mit wechselnden Basizitäten, die in Form von wässrigen Lösungen oder hydratisierten Pulvern hergestellt werden.

Ihre Struktur wird durch die Formel

Alₙ(OH)ₘCl)₃ₙ₋ₘ

beziehungsweise

Alₙ(OH)ₘBr)₃ₙ₋ₘ

wiedergegeben, wobei es sich jedoch bestenfalls um empirische Formeln handelt, denn Aluminiumhydroxychloride und/oder -bromide bilden durch Polymerisation komplizierte Moleküle mit verschieden Polymerisationsgraden. Die einzelnen basischen Polyaluminiumchloride und/oder -bromide unterscheiden sich erheblich hinsichtlich ihrer antitranspiranten Wirksamkeit, wobei Verbindungen mit einer hohen Basizität besonders wirksam sind.

Aus der europäischen Patentanmeldung EP-0 191 628 ist ein Verfahren zur Herstellung von basischen Aluminiumhalogeniden bekannt, die ein Aluminum:Halogenid-Verhältnis von 1,7:1 bis 2,2:1 aufweisen. Bei diesem Verfahren werden streng definierte, nämlich äquimolare Mengen der Ausgangsstoffe (wäßrige Aluminiumhalogenidlösung und Aluminiummetall) eingesetzt und diese Ausgangslösung so lange auf eine Temperatur von 50 bis 105°C erhitzt, bis alles Aluminiummetall aufgelöst ist und ein basisches Aluminiumhalogenid entsprechend den eingesetzten stöchiometrischen Mengen an Aluminiumhalogenid, Wasser und Aluminiummetall entstanden ist. Die auf diese Weise erhaltene (gefilterte) Lösung soll eine Aluminiumkonzentration von 0,8 bis 6,75 Gew.-%, insbesondere von 2,7 bis 5,4 Gew.-%, aufweisen, wobei die gewünschten Ergebnisse vorzugsweise unter Einsatz eines Quecksilberkatalysators erreicht werden.

Dieses Verfahren weist den Nachteil auf, daß es aufgrund der Einhaltung streng stöchiometrischer Verhältnisse und einer komplizierten Reaktionsführung recht aufwendig ist, um höherbasische Aluminiumhalogenide zu erhalten. Zudem ist der Einsatz eines Schwermetallkatalysators im Hinblick auf die Anwendung des Produktes in kosmetischen und pharmazeutischen Zubereitungen bedenklich.

Aufgabe der vorliegende Erfindung war es daher, ein verbessertes Verfahren zur Herstellung von Aluminiumhydroxychloriden und/oder Aluminiumhydroxybromiden (basischen Aluminiumchloriden und/oder -bromiden) hoher Basizität, insbesondere mit einer Basizität von über 70 %, vorzugsweise von 80 bis 85 %, bereitzustellen. Durch die erfindungsgemäße einfache und kostengünstige Reaktionsführung werden insbesondere basische Aluminiumchloride und/oder -bromide gebildet, die einen überwiegenden Anteil an Aluminiumhydroxychlorid und/oder -bromid der Formel

Al₂(OH)₅Cl

beziehungsweise

Al₂(OH)₅Br

aufweisen oder vollständig aus diesem bestehen und damit eine Basizität von 80 bis 85 % aufweisen. Der Einsatz eines Schwermetallkatalysators oder sonstigen Katalysators ist bei diesem Verfahren nicht erforderlich, so daß Rückstände einer solchen Verbindung im Endprodukt nicht vorliegen oder durch aufwendige Verfahren entfernt werden müssen, wie dies für eine industrielle Nutzung des Reaktionsproduktes im kosmetischen oder pharmazeutischen Bereich zu fordern ist.

Erfindungsgemäß wurde festgestellt, daß dieser Aufgabe ein Verfahren gerecht wird, das gemäß Anspruch 1 durch folgende Schritte gekennzeichnet ist:
(1) Umsetzung einer wäßrigen Aluminiumchlorid- und/oder Aluminiumbromidlösung und/oder einer wäßrigen Aluminiumhydroxychlorid- und/oder Aluminiumhydroxybromidlösung mit Aluminium in Form von Granulaten, Spänen und/oder Stücken mit einer Teilchengröße von mehr als 2 mm in einem mehr als zehnfachen Überschuß, bezogen auf die zur Umsetzung erforderliche stöchiometrische Menge, durch Erhitzen auf eine Temperatur von 90 bis 110°C,
(2) fortlaufende Messung des bei der Reaktion entstehenden Wasserstoffes mittels einer Gasmeßvorrichtung,
(3) Abbruch der Reaktion, wenn so viel Wasserstoff gebildet worden ist wie einer vollständigen Umsetzung zu einem Aluminiumhydroxychlorid und/oder -bromid entspricht, in welchem mehr als 70 % Hydroxylionen und weniger als 30 % Chlorid- und/oder Bromidionen pro Aluminium gebunden sind.

Die erfindungsgemäße Weiterentwicklung und vorzugsweise Ausgestaltung des Verfahrens ist in den Unteransprüchen niedergelegt. Die einzelnen Verfahrensmerkmale sind im Folgenden beschrieben.

Als Ausgangsstoffe für das erfindungsgemäße Verfahren dienen metallisches Aluminium und eine wäßrige Aluminiumchlorid- und/oder Aluminiumbromidlösung und/oder eine wäßrige Lösung eines niedrigbasischen Aluminiumhydroxychlorids und/oder Aluminiumhydroxybromids, wie beispielsweise ein Aluminiumhydroxychlorid und/oder -bromid mit einer Basizität von unter 70 %.

Das metallische Aluminium sollte eine hohe Reinheit aufweisen, während für die erstere Komponente auch Prozeßrückstände verwendet werden können, deren Reinheitsgrad lediglich den besonderen Anforderungen an eine Verwendung in einer pharmazeutischen oder kosmetischen Formulierung entsprechen muß.

Nach einer bevorzugten Ausführungsform wird für das erfindungsgemäße Verfahren eine 1 bis 13 %ige, vorzugsweise eine 10 bis 12 %ige, wäßrige Aluminiumchlorid- und/oder Aluminiumbromidlösung eingesetzt.

Nach einer weiteren bevorzugten Ausführungsform wird für das erfindungsgemäße Verfahren eine 1 bis 45 % ige, vorzugsweise 10 bis 25 %ige, wäßrige Aluminiumhydroxychlorid- und/oder Aluminiumhydroxybromidlösung verwendet.

Die Umsetzung wird vorzugsweise in einem diskontinuierlichen Reaktor (in einem sogenannten Batch-Prozeß) durchgeführt.

Die aluminiumchlorid- und/oder aluminiumbromidhaltige und/oder aluminiumhydroxychlorid- und/oder aluminiumhydroxybromidhaltige wäßrige Lösung wird in den Reaktor eingeleitet, in dem ein Festbett aus Aluminium in Form von Granulat, Spänen und/oder Stücken in einer Teilchengröße von mehr als 2 mm, vorzugsweise in einer mittleren Teilchengröße von mehr als 3 mm, vorgelegt ist. Die Menge an metallischem Aluminium ist dabei mehr als zehnmal, vorzugsweise mehr als achtzehnmal, insbesondere zwanzigmal höher als einer vollständigen stöchiometrischen Umsetzung zu AL₂(OH)₅Cl und/oder Al₂(OH)₅Br entsprechen würde.

Die Lösung wird dann auf eine Temperatur von 90 bis 110°C, vorzugsweise von 95 bis 98°C, erhitzt, wobei die schwach exotherme Reaktion bei ca. 70°C startet. Der entstehende Wasserstoff wird aus dem Reaktionsgefäß abgeleitet und die Menge mittels einer Gasmeßvorrichtung, vorzugsweise einer Gasuhr, fortlaufend bestimmt. Die Reaktion wird abgebrochen, wenn so viel Wasserstoff gebildet worden ist, wie einer vollständigen Umsetzung zu einem Aluminiumhydroxychlorid und/oder Aluminiumhydroxybromid entspricht, in welchem mehr als 70 %, vorzugsweise 80 bis 85 %, Hydroxylionen und weniger als 30 %, vorzugsweise 15 bis 20 %, Chlorid- und/oder Bromidionen pro Aluminium gebunden sind. Es müssen also nicht streng äquimolare Mengenverhältnisse bezüglich der Ausgangsstoffe eingehalten und eine komplizierte Überwachung des Reaktionsverlaufes durchgeführt werden, um das gewünschte Reaktionsprodukt zu erhalten, sondern die Endpunktsbestimmung erfolgt hier durch die Ermittlung einer entsprechend umgesetzten Menge an Wasserstoff mittels einer Gasuhr.

Nach einer bevorzugten Ausführungsform wird die Umsetzung erst abgebrochen, wenn zu mehr als 80 %, insbesondere zu mehr als 90 %, ein Aluminiumhydroxychlorid und/oder Aluminiumhydroxybromid der empirischen Formel

Al₂(OH)₅Cl

beziehungsweise

Al₂(OH)₅Br

gebildet worden ist. Durch fortlaufende Messung des gebildeten Wasserstoffes während der Reaktion wird der Zeitpunkt der vollständigen Umsetzung der Ausgangsstoffe ermittelt und dann die Reaktion abgebrochen, indem die gebildete Aluminiumhydroxychlorid- und/oder -bromidlösung, die hauptsächlich Al₂(OH)₅Cl und/oder Al₂(OH)₅Br enthält oder aus diesem besteht, möglichst rasch aus dem Reaktionsgefäß abgelassen wird, während das zurückbleibende Bett aus Aluminiumfeststoffteilchen für weitere Umsetzungen verwendet werden kann (gegebenenfalls nach einer Spülung mit Wasser und/oder Inertgas). Nur das verbrauchte Aluminium wird durch frische Aluminiumspäne , -granulat und/oder -teilchen ersetzt. Die in dem Aluminiumfestbett enthaltene Restwärme kann dabei für weitere Reaktionen ausgenutzt werden, so daß das Verfahren mit einem möglichst geringen Energieaufwand durchgeführt wird.

Die hergestellte, Aluminiumhydroxychlorid und/oder -bromid enthaltende wäßrige Lösung wird durch Filtration, vorzugsweise durch Mikrofiltration, gereinigt. Die Menge an abfiltrierten Verunreinigungen ist nur klein und besteht im wesentlichen aus den Verunreinigungen des Aluminiummetalls wie Eisen, Silizium u. a. sowie mitgerissenen Aluminiumteilchen und ggf. sehr geringen Anteilen an unlöslichem Aluminiumhydroxychlorid und/oder -bromid. Anschließend wird das Endprodukt einer Sprühtrocknung unterworfen.

Nach einer bevorzugten Ausführungsform wird die Umsetzung der Ausgangsstoffe in einer Inertgasatmosphäre, vorzugsweise in einer Stickstoffatmosphäre, durchgeführt, um das Aluminiummetall vor Oxidation zu bewahren und die Bildung explosiver Gasmischungen zu vermeiden.

Das nach dem erfindungsgemäßen Verfahren erhaltene katalysatorfreie Aluminiumhydroxychlorid und/oder -bromid wird in kosmetischen oder pharmazeutischen Zubereitungen verwendet, vorzugsweise als Antitranspirant und/oder in Deostiften oder in Roll-on-Deodorants. Es hat insbesondere aufgrund seines hohen Gehaltes an Al₂(OH)₅Cl und/oder Al₂(OH)₅Br eine sehr gute antitranspirante Wirksamkeit.

Die Erfindung betrifft weiterhin eine Vorrichtung zur Herstellung von Aluminiumhydroxychlorid und/oder -bromid hoher Basizität. Diese Vorrichtung wird im Folgenden anhand der Zeichnungsfigur 1 beschrieben und besteht aus einem beheizbaren Behälter oder Reaktor (1), einem Vorratsbehälter (2) für das metallische Aluminium, einem Vorratsbehälter (4) für die Aluminiumchlorid- und/oder Aluminiumbromidlösung und/oder die Aluminiumhydroxychlorid- und/oder Aluminiumhydroxybromidlösung, wobei die Behälter (2) und (4) jeweils über Zuleitungen mit dem Reaktorraum verbunden sind, einer Zuführung (6) für das Inertgas, sowie einem Vorlagebehälter (15) für die hergestellte Aluminiumhydroxychlorid- und/ oder Aluminiumhydroxybromidlösung, der mit dem Reaktor (1) über eine Ableitung in Verbindung steht. Erfindungsgemäß ist der Reaktor (1) ein Festbettreaktor, in dem ein Festbett aus Aluminiumteilchen vorgelegt ist, das in der Nähe des Reaktorbodens auf einem gitter-, sieb- oder netzförmigen Einsatz (7) aufliegt, so daß zwischen diesem Einsatz und dem Reaktorboden ein Freiraum verbleibt, wobei die Maschenweite des gitter-, sieb- oder netzförmigen Einsatzes kleiner als 2 mm ist. In den oberen Reaktorraum mündet oberhalb des Festbettes eine Schlauch- oder Rohrleitung (9), über die der entwickelte Wasserstoff zu einer Gasmeßvorrichtung (10) geführt wird, und die Auslaßöffnung im unteren Bereich des Reaktorraumes weist eine Größe von mehr als 1/20 des Reaktorinnendurchmessers auf.

Bei dem Reaktor (1) handelt es sich nach einer bevorzugten Ausführungsform um einen Doppelmantelreaktor mit einem umlaufenden Heizmedium, vorzugsweise Wasserdampf. Das Kondensat dieses Heizmediums wird über eine Leitung (22) dem Mantelraum zu- beziehungsweise aus diesem abgeführt.

In den oberen Reaktorraum, vorzugsweise oberhalb des Festbettes aus Aluminiumgranulat, -späne und/oder -stücken münden eine Zuleitung (3) für die Aluminiumteilchen, eine Zuleitung (5) für die Aluminiumchlorid- und/oder Aluminiumbromidlösung und/oder die Aluminiumhydroxychlorid- und/oder Aluminiumhydroxybromidlösung, wobei die Lösung gegebenenfalls mit Hilfe einer Pumpe (23) in den Reaktor gepumpt wird, sowie eine Zuleitung für das Inertgas (6).

Das Festbett aus metallischem Aluminium wird von einem gitter-, sieb- oder netzförmigen Einsatz (7) getragen, der im unteren Bereich des Reaktorraumes angeordnet ist, so daß zwischen diesem Einsatz und dem Reaktorboden ein Freiraum verbleibt, in dem sich zunächst die Ausgangsflüssigkeit sowie, im Laufe der Reaktion, die hergestellte Aluminiumhydroxychlorid- und/oder -bromidlösung ansammeln. Eine Durchmischung von Ausgangslösung und metallischem Aluminium im Bereich des Festbettes findet allein durch die Wasserstoffentwicklung und die damit aufsteigenden Gasblasen statt. Jedoch kann gegebenenfalls eine Mischvorrichtung, beispielsweise in Form eines Rührers, eingesetzt werden.

Die Maschenweite des gitter-, sieb- oder netzförmigen Einsatzes ist kleiner als 2 mm, so daß die Aluminiumteilchen des Festbettes zurückgehalten werden und nicht in den Freiraum unterhalb des Einsatzes (7) gelangen können.

In den oberen Reaktorraum, vorzugsweise oberhalb des Festbettes aus Aluminiumteilchen, mündet weiterhin eine Schlauch- oder Rohrleitung (9), die den entwickelten Wasserstoff zu einer Gasmeßvorrichtung (10) leitet. Dabei handelt es sich nach einer bevorzugten Ausführungsform um eine Vorrichtung zur Messung eines Gasvolumens und/oder einer Gaszusammensetzung, insbesondere um eine Gasuhr.

Über den Auslaß im unteren Bereich des Reaktorraumes, vorzugsweise im Reaktorboden, wird die hergestellte Aluminiumhydroxychlorid- und/oder -bromidlösung aus dem Reaktionsraum ausgetragen. Dies erfolgt innerhalb eines sehr kurzen Zeitraumes, nachdem über die Gasmeßvorrichtung der Reaktionsendpunkt gemäß einer vollständigen Umsetzung ermittelt und angezeigt worden ist, damit nicht durch Weiterreaktionen unerwünschte Nebenprodukte gebildet werden. Um eine kurze Austragszeit für die gebildete Aluminiumhydroxychlorid und/oder -bromidlösung zu gewährleisten, wird die Auslaßöffnung möglichst groß gewählt. Sie beträgt mindestens 1/20 des Reaktorinnendurchmessers.

Nach einer bevorzugten Ausführungsform ist der Auslaß über eine Schlauch- oder Rohrleitung (11) mit einer Pumpe (12) verbunden, um die hergestellte Aluminiumhydroxychlorid- und/oder - bromidlösung aus dem Reaktor abzupumpen und dadurch die Austragszeit weiter zu verkürzen.

Nach einer weiteren bevorzugten Ausführungsform ist die Gasmeßvorrichtung (10) über einen elektrischen und/oder elektronischen Regelkreis mit dem Auslaß im unteren Bereich des Reaktorraumes verbunden, wodurch bei Erreichen beziehungsweise Messung der einer vollständigen Umsetzung der Ausgangsstoffe entsprechenden Wasserstoffentwicklung die Auslaßöffnung automatisch freigegeben wird.

Die erfindungsgemäße Vorrichtung umfaßt weiterhin nach einer bevorzugten Ausführungsform eine Anlage zur Filtration (13), vorzugsweise zur Mikrofiltration, der Aluminiumhydroxychlorid- und/oder Aluminiumhydroxybromidlösung. Dabei gleichzeitig freigesetzte Restanteile an Inertgas sowie Wasserstoffgas werden über Leitung (21) abgeführt.

Die filtrierte Aluminiumhydroxychlorid- und/oder -bromidlösung wird über Leitung (14) einem Vorlagebehälter (15) zugeführt. Ein Teil dieser Lösung wird über Leitung (16) gemäß einer bevorzugten Ausführungsform einem Trockner (18), vorzugsweise einer Sprühtrocknungsanlage, zugeführt, der über eine Vorrichtung (19) beheizt beziehungsweise mit Energie zur Wärmeerzeugung versorgt wird.

Das getrocknete, pulverförmige Aluminiumhydroxychlorid und/oder -bromid wird in den Lagerbehälter (20) überführt.

Der andere Teil der Aluminiumhydroxychlorid- und/oder -bromidlösung wird in dem Lagerbehälter (17) gesammelt.

Nach einer weiteren bevorzugten Ausführungsform weist der gitter-, sieb- oder netzförmige Einsatz (7) eine Öffnung auf, die mit Hilfe einer stempelförmigen Einrichtung (8) verschlossen ist, die - parallel zur senkrechten Reaktorachse - über der Öffnung in dem Einsatz (7) angeordnet ist und durch eine Hebe- oder Senkbewegung diese Öffnung freigibt beziehungsweise verschließt. Durch Heben der stempelförmigen Einrichtung kann das Festbett aus metallischem Aluminium nach mehreren Reaktionszyklen aus dem Reaktor abgelassen werden, um den Reaktionsraum anschließend vollständig zu reinigen.

Die nachfolgenden Ausführungsbeispiele sollen die Erfindung erläutern, ohne sie darauf zu beschränken.

### Beispiel 1

In einem Dopppelmantelreaktor wird ein Festbett aus 20 kg Aluminiumgranalien mit einer Teilchengröße von 4 bis 14 mm vorgelegt. Dazu gibt man 3,21 l einer 28,6 %-igen wäßrigen Aluminiumchloridlösung und 4,91 l Verdünnungswasser. Der Überschuß an metallischem Aluminium entspricht dem zwanzigfachen einer zur vollständigen Umsetzung erforderlichen stöchiometrischen Menge. Das Reaktionsgemisch wird durch Umpumpen von Thermoflüssigkeit durch den äußeren Reaktormantel aufgeheizt. Die Reaktion springt bei ca. 70°C an und erhöht sich im Verlauf der Reaktion auf ca. 98°C. Durch die Wasserstoffentwicklung im Reaktor erzielt man eine ausreichende Durchmischung, so daß nicht gerührt werden muß. Die gebildete Gasmenge wird durch einen Rückflußkühler zu einer Gasuhr geleitet und dort fortlaufend gemessen. Sofort nachdem ein Gasvolumen von 1353 l angezeigt worden ist, wird die Umsetzung abgebrochen, indem die gebildete Aluminiumhydroxychloridlösung durch schnelles Abpumpen über ein Ventil im Reaktorboden abgelassen wird. Das zurückbleibende Aluminiumfestbett kann mit frischen Granalien aufgefüllt und für folgende Umsetzungen wiederverwendet werden. Zwecks Vermeidung von Oxidation wird das Aluminiumfestbett zwischen den Einsätzen mit Stickstoff inertisiert und nachfolgend neu beschickt. Die nach Beendigung der Reaktion erhaltene Aluminiumhydroxychloridlösung wird durch eine nachfolgende Mikrofiltration bei ca. 60°C von enthaltenen feinen Schwebstoffen gereinigt.

Die Analyse einer Probe des erhaltenen flüssigen, klaren und farblosen Produktes ergibt: 22,1 % Al₂O₃, 8,9 % Cl und 80,8 % Basizität. Dies entspricht einer theoretischen Bruttozusammensetzung von Al₂(OH)_{4,8}Cl_{1,2}.

### Beispiel 2

In den unter Beispiel 1 beschriebenen und mit 4 kg Aluminiumgranalien mit einer Teilchengröße von 4 bis 14 mm gefüllten Doppelmantelreaktor werden 8,9 l einer 13,07 %-igen wäßrigen Aluminiumhydroxychloridlösung mit einer Basizität von 68,31 % gegeben. Der Überschuß an metallischem Aluminium entspricht dem 21,6-fachen einer zur vollständigen Umsetzung erforderlichen stöchiometrischen Menge. Das Reaktionsgemisch wird aufgeheizt und auf 95°C gehalten. Nachdem sich 196 l Wasserstoff gebildet haben, wird die erhaltene Aluminiumhydroxychloridlösung über ein Bodenventil abgepumpt und bei ca. 60°C filtriert. Die nach der Mikrofiltration erhaltene Lösung des Aluminiumhydroxychlorides ist klar und farblos.

Die Analyse einer Probe des erhaltenen flüssigen Produktes ergibt 11,4 % Al₂O₃, 4,1 % Cl und 82,8 % Basizität. Dies entspricht einer theoretischen Bruttozusammensetzung von Al₂(OH)_{5,0}Cl_{1,0}.

### Beispiel 3

In den unter Beispiel 1 beschriebenen und mit 19,2 kg Aluminiumgranalien mit einer Teilchengröße von 4 bis 14 mm gefüllten Doppelmantelreaktor werden 2,9 kg einer 29,9 %-igen wäßrigen Aluminiumchloridlösung und 1,4 kg einer 17,1 %igen wäßrigen Aluminiumhydroxychloridlösung mit einer Basizität von 72,4 % sowie 4,7 l dest. Wasser gegeben. Der Überschuß an metallischem Aluminium entspricht dem 20-fachen einer zur vollständigen Umsetzung erforderlichen stöchiometrischen Menge. Das Reaktionsgemisch wird aufgeheizt und auf 97°C gehalten. Nachdem sich 1240 l Wasserstoff gebildet haben, wird die erhaltene Aluminiumhydroxychloridlösung schnell über ein Bodenventil abgepumpt und bei ca. 60°C einer Mikrofiltration unterworfen.

Die Analyse einer Probe des erhaltenen flüssigen, klaren und farblosen Produktes ergibt 20,9 % Al₂O₃, 7,1 % Cl und 83,7 % Basizität. Dies entspricht einer theoretischen Bruttozusammensetzung von Al₂(OH)_{5,0}Cl_{1.0}.

### Beispiel 4

In den unter Beispiel 1 beschriebenen und mit 5,5 kg Aluminiumgranalien mit einer Teilchengröße von 4 bis 14 mm gefüllten Doppelmantelreaktor werden 1,7 l einer 25 %-igen wäßrigen Aluminiumbromidlösung sowie 5,5 l dest. Wasser gegeben. Der Überschuß an metallischem Aluminium entspricht dem 24,4-fachen einer zur vollständigen Umsetzung erforderlichen stöchiometrischen Menge. Das Reaktionsgemisch wird aufgeheizt und auf 95°C gehalten. Nachdem sich 278 l Wasserstoff gebildet haben, wird die erhaltene Aluminiumhydroxybromidlösung schnell über ein Bodenventil abgepumpt und anschließend einer Mikrofiltration unterworfen. Die nach der Filtration erhaltene Lösung ist klar und farblos.

Die Analyse einer Probe des erhaltenen flüssigen Produktes ergibt 6,7 % Al₂O₃, 5,8 % Br und 81,6 % Basizität. Dies entspricht einer theoretischen Bruttozusammensetzung von Al₂(OH)_{4,9}Br_{1,1}.

Da die kosmetische Industrie Aluminiumsalze vorzugsweise in Form von Pulvern verarbeitet, werden die nach Beispiel 1 und Beispiel 2 hergestellten flüssigen Produkte getrocknet.

Um irreversible Wasserabspaltungen aus dem hochbasischen Salz zu vermeiden, wird die Trocknung unter milden Bedingungen in einem Sprühturm mit Zerstäuberscheibe durchgeführt.

Gute Pulverprodukte lassen sich bei Lufteintrittstemperaturen von ca. 150°C und Austrittstemperaturen von ca. 60°C erhalten. Die Ergebnisse der Trocknungsversuche sind in der nachstehenden Tabelle festgehalten.

**Tabelle 1**

| Aluminiumhydroxychlorid gemäß | Beispiel 1 | | Beispiel 2 | |
|---|---|---|---|---|
| | flüssig | fest | flüssig | fest |
| Al₂O₃ (%) | 22,1 | 45,0 | 11,4 | 47,6 |
| Chlorid (%) | 8,9 | 18,1 | 4,1 | 17,1 |
| Basizität(%) | 80,7 | 80,7 | 82,8 | 82,8 |
| Wasser (%) | 61,6 | 21,8 | 80,4 | 18,2 |

Bei den angegebenen Prozentangaben handelt es sich um Gewichtsprozente.

Der Wassergehalt in dem getrockneten Produkt ist Hydratwasser.

Die erfindungsgemäß hergestellten Aluminiumhydroxychloride sind sowohl in flüssiger als auch in fester Form ausgezeichnet zur Herstellung von kosmetischen oder pharmazeutischen Artikeln mit antitranspiranter Wirkung geeignet. Beispiele sind nachfolgend aufgeführt.

### Antitranspirant - Gel

### Formulierung I:

40 Teile Prod. Beispiel 1 (flüssig)
12 Teile Polyethoxy 30-Cetyl-stearylalkohol
20 Teile Polyol-Fettsäureester
5 Teile Paraffinoel DAB
23 Teile Wasser

### Formulierung II:

20 Teile Prod. Beispiel 1 (fest)
12 Teile Polyethoxy 30-Cetyl-stearylalkohol
20 Teile Polyol-Fettsäureester
5 Teile Paraffinoel DAB
43 Teile Wasser

### Antitranspirant - Roll - on - Lotion

20 Teile Produkt Beispiel 2 (fest)
0,15 Teile PEG-40 hydriertes Rizinusöl
0,15 Teile PEG-60 hydriertes Rizinusöl
10,0 Teile Ethanol abs.
0,6 Teile Hydroxyethylcellulose
2,0 Teile Glycerin
2,0 Teile Polyol-Fettsäureester
0,1 Teile Parfümoel
65,2 Teile Wasser

### Antitranspirant - Liquid

20 Teile Produkt Beispiel 1 (flüssig)
3 Teile Triglycerinmonolaurat
23 Teile Polyol-Fettsäureester
8 Teile Paraffinoel DAB
43 Teile Wasser

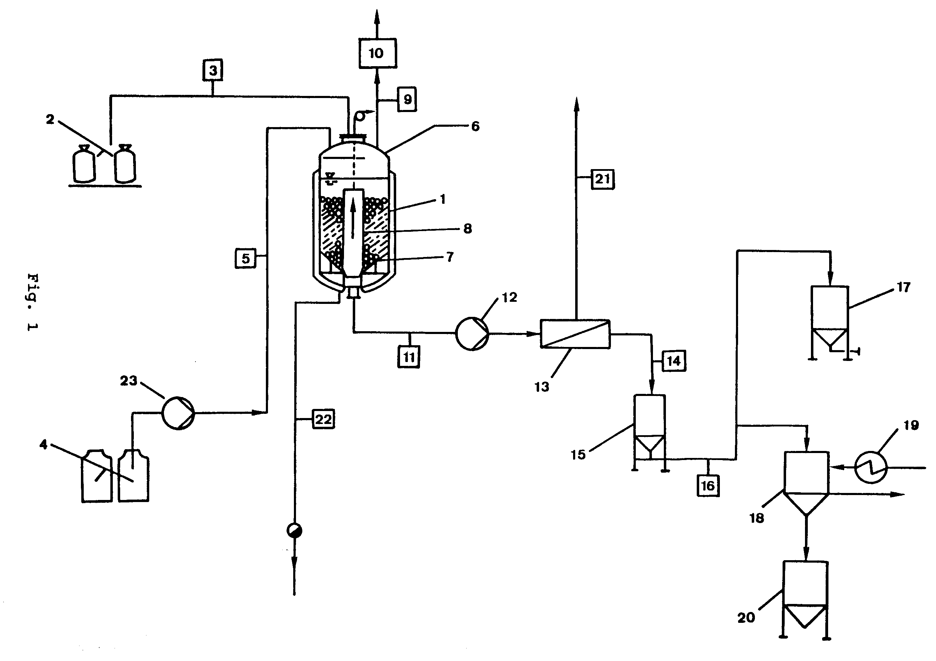

## Patentansprüche

1. Verfahren zur Herstellung von Aluminiumhydroxychlorid und/oder -bromid hoher Basizität durch Umsetzung einer wäßrigen Lösung eines Aluminiumhalogenids und/oder eines niedrigbasischen Aluminiumhydroxyhalogenids mit Aluminium unter Erwärmung, gekennzeichnet durch die Schritte
(1) Umsetzung einer wäßrigen Aluminiumchlorid- und/oder Aluminiumbromidlösung und/oder einer wäßrigen Aluminiumhydroxychlorid- und/oder Aluminiumhydroxybromidlösung mit Aluminium in Form von Granulaten, Spänen und/oder Stücken mit einer Teilchengröße von mehr als 2 mm in einem mehr als zehnfachen Überschuß, bezogen auf die zur vollständigen Umsetzung zu Al₂(OH)₅Cl oder Al₂(OH)₅Br erforderliche stöchiometrische Menge, durch Erhitzen auf eine Temperatur von 90 bis 110°C,
(2) fortlaufende Messung des bei der Reaktion entstehenden Wasserstoffes mittels einer Gasmeßvorrichtung,
(3) Abbruch der Reaktion, wenn so viel Wasserstoff gebildet worden, ist wie einer vollständigen Umsetzung zu einem Aluminiumhydroxychlorid und/oder -bromid entspricht, in welchem mehr als 70 % Hydroxylionen und weniger als 30 % Chlorid- und/oder Bromidionen pro Aluminium gebunden sind.

2. Verfahren nach Anspruch 1, dadurch gekennzeichnet, daß die Reaktion erst abgebrochen wird, wenn eine vollständige Umsetzung zu einem Aluminiumhydroxychlorid und/oder -bromid erfolgt ist, in welchem 80 bis 85 % Hydroxylionen und 15 bis 20 % Chlorid- und/oder Bromidionen pro Aluminium gebunden sind.

3. Verfahren nach den Ansprüchen 1 und 2, dadurch gekennzeichnet, daß die vollständige Umsetzung mittels einer Gasuhr durch fortlaufende Messung des während der Reaktion entstehenden Wasserstoffes bestimmt wird und die Reaktion erst abgebrochen wird, wenn zu mehr als 80 %, vorzugsweise zu mehr als 90 % ein Aluminiumhydroxychlorid und/oder -bromid gemäß der empirischen Formel Al₂(OH)₅Cl und/oder Al₂(OH)₅Br gebildet worden ist.

4. Verfahren nach einem oder mehreren der Ansprüche 1 bis 3, dadurch gekennzeichnet, daß das metallische Aluminium in Form von Granulaten, Spänen und/oder Stücken mit einer mittleren Teilchengröße von mehr als 3 mm eingesetzt wird.

5. Verfahren nach einem oder mehreren der Ansprüche 1 bis 4, dadurch gekennzeichnet, daß das metallische Aluminium in einem mehr als achtzehnfachen, vorzugsweise zwanzigfachen, Überschuß, bezogen auf die zur Umsetzung erforderliche stöchiometrische Menge, eingesetzt wird.

6. Verfahren nach einem oder mehreren der Ansprüche 1 bis 5, dadurch gekennzeichnet, daß eine 1 bis 13 %ige, vorzugsweise 10 bis 12 %ige, wäßrige Aluminiumchlorid- und/oder Aluminiumbromidlösung eingesetzt wird.

7. Verfahren nach einem oder mehreren der Ansprüche 1 bis 5, dadurch gekennzeichnet, daß eine 1 bis 45 %ige, Vorzugsweise 10 bis 25 %ige, wäßrige Aluminiumhydroxychlorid- und/oder Aluminiumhydroxybromidlösung eingesetzt wird.

8. Verfahren nach einem oder mehreren der Ansprüche 1 bis 7, dadurch gekennzeichnet, daß die aluminiummetallhaltige wäßrige Aluminiumchlorid- und/oder Aluminiumbromid und/oder Aluminiumhydroxychlorid- und/oder Aluminiumhydroxybromidlösung auf eine Temperatur von 95 bis 98°C erhitzt wird.

9. Verfahren nach einem oder mehreren der Ansprüche 1 bis 8, dadurch gekennzeichnet, daß die Durchführung des Verfahrens diskontinuierlich erfolgt, indem die Reaktion, nachdem so viel Wasserstoff gebildet worden ist wie einer vollständigen Umsetzung der Ausgangsstoffe entspricht, abgebrochen und die hergestellte Aluminiumhydroxychlorid- und/oder Aluminiumhydroxybromidlösung aus dem Reaktor ausgetragen und das zurückbleibende Bett aus Aluminiumfeststoffteilchen für weitere Umsetzungen wiederverwendet wird.

10. Verfahren nach einem oder mehreren der Ansprüche 1 bis 9, dadurch gekennzeichnet, daß das hergestellte Aluminiumhydroxychlorid und/oder -bromid, vorzugsweise das aus Al₂(OH)₅Cl und/oder AL₂(OH)₅Br bestehende oder Al₂(OH)₅Cl und/oder AL₂(OH)₅Br zu mehr als 80 % enthaltende Aluminiumhydroxychlorid und/oder -bromid, durch Filtration, vorzugsweise durch Mikrofiltration, gereinigt und anschließend einer Sprühtrocknung unterworfen wird.

11. Verfahren nach einem oder mehreren der Ansprüche 1 bis 10, dadurch gekennzeichnet, daß die Umsetzung von wäßriger Aluminiumchlorid- und/oder Aluminiumbromidlösung und/oder wäßriger Aluminiumhydroxychlorid- und/oder Aluminiumhydroxybromidlösung mit metallischem Aluminium in einer Inertgasatmosphäre, vorzugsweise in einer Stickstoffatmosphäre, durchgeführt wird.

12. Vorrichtung zur Durchführung des Verfahrens nach den Ansprüchen 1 bis 11, bestehend aus einem beheizbaren Behälter oder Reaktor (1), einem Vorratsbehälter (2) für das metallische Aluminium, einem Vorratsbehälter (4) für die Aluminiumchlorid- und/oder Aluminiumbromidlösung und/oder die Aluminiumhydroxychlorid- und/oder Aluminiumhydroxybromidlösung, wobei die Behälter (2) und (4) jeweils über Zuleitungen mit dem Reaktorraum verbunden sind, einer Zuführung (6) für das Inertgas, sowie einem Vorlagebehälter (15) für die hergestellte Aluminiumhydroxychlorid- und/ oder Aluminiumhydroxybromidlösung, der mit dem Reaktor (1) über eine Ableitung in Verbindung steht, dadurch gekennzeichnet, daß der Reaktor (1) ein Festbettreaktor ist, in dem ein Festbett aus Aluminiumteilchen vorgelegt ist, das in der Nähe des Reaktorbodens auf einem gitter-, sieb- oder netzförmigen Einsatz (7) aufliegt, so daß zwischen diesem Einsatz und dem Reaktorboden ein Freiraum verbleibt, wobei die Maschenweite des gitter-, sieb- oder netzförmigen Einsatzes kleiner als 2 mm ist, daß in den oberen Reaktorraum oberhalb des Festbettes eine Schlauch- oder Rohrleitung (9) mündet, über die der entwickelte Wasserstoff zu einer Gasmeßvorrichtung (10) geführt wird und daß die Auslaßöffnung im unteren Bereich des Reaktorraumes eine Größe von mehr als 1/20 des Reaktorinnendurchmessers aufweist.

13. Vorrichtung nach Anspruch 12, dadurch gekennzeichnet, daß die Gasmeßvorrichtung (10) eine Vorrichtung zur Messung eines Gasvolumens und/oder einer Gaszusammensetzung, vorzugsweise eine Gasuhr, ist.

14. Vorrichtung nach den Ansprüchen 12 und 13, dadurch gekennzeichnet, daß der Auslaß im Reaktorboden angeordnet ist und über eine Schlauch- oder Rohrleitung (11) mit einer Pumpe (12) verbunden ist.

15. Vorrichtung nach einem oder mehreren der Ansprüche 12 bis 14, dadurch gekennzeichnet, daß zwischen der Pumpe (12) und dem Vorlagebehälter (15) eine Vorrichtung zur Filtration (13), vorzugsweise zur Mikrofiltration, der Aluminiumhydroxychlorid- und/oder Aluminiumhydroxybromidlösung angeordnet ist.

16. Vorrichtung nach einem oder mehreren der Ansprüche 12 bis 15, dadurch gekennzeichnet, daß sie einen Trockner (18), vorzugsweise eine Sprühtrocknungsanlage, für die hergestellte Aluminiumhydroxychlorid- und/oder Aluminiumhydroxybromidlösung umfaßt.

17. Vorrichtung nach einem oder mehreren der Ansprüche 12 bis 16, dadurch gekennzeichnet, daß der Reaktor (1) ein Doppelmantelreaktor mit einem umlaufenden Heizmedium, vorzugsweise Wasserdampf, ist.

18. Vorrichtung nach einem oder mehreren der Ansprüche 12 bis 17, dadurch gekennzeichnet, daß der gitter-, sieb- oder netzförmige Einsatz (7) eine Öffnung aufweist, die durch eine stempelförmige Einrichtung (8) verschlossen ist, die - parallel zur senkrechten Reaktorachse - über oder in der Öffnung angeordnet ist und durch eine Hebe- oder Senkbewegung diese Öffnung freigibt beziehungsweise verschließt.

19. Vorrichtung nach einem oder mehreren der Ansprüche 12 bis 18, dadurch gekennzeichnet, daß die Gasmeßvorrichtung (10) über einen elektrischen und/oder elektronischen Regelkreis mit dem Auslaß im unteren Bereich des Reaktorraumes verbunden ist.

## Claims

1. A method for the preparation of aluminium hydroxy chloride and/or bromide of high basicity by reacting an aqueous solution of an aluminium halide and/or of a low-basic aluminium hydroxy halide with aluminium with heating, characterised by the steps
(1) reaction of an aqueous aluminium chloride and/or aluminium bromide solution and/or an aqueous aluminium hydroxy chloride and/or aluminium hydroxy bromide solution with aluminium in the form of granules, chippings and/or pieces having a particle size of more than 2 mm in a more than ten-fold excess, relative to the stoichiometric quantity required for complete reaction to Al₂(OH)₅Cl or Al₂(OH)₅Br, by heating to a temperature of 90 to 110°C,
(2) continuous measurement of the hydrogen produced upon the reaction, by means of a gas-measuring device,
(3) termination of the reaction when an amount of hydrogen has been formed such as corresponds to a complete reaction to an aluminium hydroxy chloride and/or bromide, in which more than 70% hydroxyl ions and less than 30% chloride and/or bromide ions per aluminium are bound.

2. A method according to Claim 1, characterised in that the reaction is not terminated until a complete reaction to an aluminium hydroxy chloride and/or bromide has taken place in which 80 to 85% hydroxyl ions and 15 to 20% chloride and/or bromide ions per aluminium are bound.

3. A method according to Claims 1 and 2, characterised in that the complete reaction is determined by means of a gas meter by continuous measurement of the hydrogen produced during the reaction and the reaction is not terminated until more than 80%, preferably more than 90%, of an aluminium hydroxy chloride and/or bromide has been formed in accordance with the empirical formula Al₂(OH)₅Cl and/or Al₂(OH)₅Br.

4. A method according to one or more of Claims 1 to 3, characterised in that the metallic aluminium is used in the form of granules, chippings and/or pieces having an average particle size of more than 3 mm.

5. A method according to one or more of Claims 1 to 4, characterised in that the metallic aluminium is used in a more than eighteen-fold, preferably twenty-fold, excess, relative to the stoichiometric quantity required for reaction.

6. A method according to one or more of Claims 1 to 5, characterised in that a 1 to 13%, preferably 10 to 12%, aqueous aluminium chloride and/or aluminium bromide solution is used.

7. A method according to one or more of Claims 1 to 5, characterised in that a 1 to 45%, preferably 10 to 25%, aqueous aluminium hydroxy chloride and/or aluminium hydroxy bromide solution is used.

8. A method according to one or more of Claims 1 to 7, characterised in that the aqueous aluminium chloride and/or aluminium bromide and/or aluminium hydroxy chloride and/or aluminium hydroxy bromide solution containing aluminium metal is heated to a temperature of 95 to 98°C.

9. A method according to one or more of Claims 1 to 8, characterised in that the method is performed discontinuously in that the reaction, once as much hydrogen has been formed as corresponds to complete reaction of the starting materials, is terminated and the aluminum hydroxy chloride and/or aluminium hydroxy bromide solution produced is discharged from the reactor and the remaining bed of aluminium solids particles is re-used for further reactions.

10. A method according to one or more of Claims 1 to 9, characterised in that the aluminium hydroxy chloride and/or bromide produced, preferably the aluminium hydroxy chloride and/or bromide consisting of Al₂(OH)₅Cl and/or Al₂(OH)₅Br or containing more than 80% Al₂(OH)₅Cl and/or Al₂(OH)₅Br is purified by filtration, preferably by microfiltration, and is then subjected to spray drying.

11. A method according to one or more of Claims 1 to 10, characterised in that the reaction of aqueous aluminium chloride and/or aluminium bromide solution and/or aqueous aluminium hydroxy chloride and/or aluminium hydroxy bromide solution with metallic aluminium is effected in an inert gas atmosphere, preferably in a nitrogen atmosphere.

12. An apparatus for performing the method according to Claims 1 to 11, consisting of a heatable vessel or reactor (1), a storage vessel (2) for the metallic aluminium, a storage vessel (4) for the aluminium chloride and/or aluminium bromide solution and/or the aluminium hydroxy chloride and/or aluminium hydroxy bromide solution, the vessels (2) and (4) each being connected to the reactor chamber via feed lines, a feed means (6) for the inert gas, and also a receptacle (15) for the aluminium hydroxy chloride and/or aluminium hydroxy bromide solution produced, which receptacle communicates with the reactor (1) via a discharge pipe, characterised in that the reactor (1) is a fixed-bed reactor in which a fixed bed of aluminium particles is placed, which lies on a grid-shaped, sieve-shaped or net-shaped insert (7) in the vicinity of the reactor base, so that a space remains between this insert and the reactor base, the mesh width of the grid-shaped, sieve-shaped or net-shaped insert being less than 2 mm, that a tube or pipe (9) opens into the upper reactor chamber above the fixed bed, via which the hydrogen evolved is passed to a gas-measuring device (10) and that the outlet opening in the lower region of the reactor chamber has a size of more than 1/20 of the internal diameter of the reactor.

13. An apparatus according to Claim 12, characterised in that the gas-measuring device (10) is a device for measuring a gas volume and/or a gas composition, preferably a gas meter.

14. An apparatus according to Claims 12 and 13, characterised in that the outlet is located in the reactor base and is connected to a pump (12) via a tube or pipe (11).

15. An apparatus according to one or more of Claims 12 to 14, characterised in that a device for filtration (13), preferably for microfiltration, of the aluminium hydroxy chloride and/or aluminium hydroxy bromide solution is arranged between the pump (12) and the receptacle (15).

16. An apparatus according to one or more of Claims 12 to 15, characterised in that it comprises a dryer (18), preferably a spray-drying plant, for the aluminium hydroxy chloride and/or aluminium hydroxy bromide solution produced.

17. An apparatus according to one or more of Claims 12 to 16, characterised in that the reactor (1) is a double-shell reactor with a circulating heating medium, preferably steam.

18. An apparatus according to one or more of Claims 12 to 17, characterised in that the grid-shaped, sieve-shaped or net-shaped insert (7) has an opening which is closed by a plunger-like means (8) which is arranged over or in the opening, parallel to the vertical reactor axis, and opens or closes this opening respectively by a raising or lowering movement.

19. An apparatus according to one or more of Claims 12 to 18, characterised in that the gas-measuring device (10) is connected via an electrical and/or electronic control circuit to the outlet in the lower region of the reactor chamber.

## Revendications

1. Procédé de préparation de chlorure et/ou de bromure d'hydroxyaluminium de basicité élevée par réaction d'une solution aqueuse d'un halogénure d'aluminium et/ou d'un halogénure d'hydroxyaluminium faiblement basique avec de l'aluminium, par chauffage, caractérisé par les étapes :
(1) de réaction d'une solution aqueuse de chlorure d'aluminium et/ou de bromure d'aluminium et/ou d'une solution aqueuse de chlorure d'hydroxyaluminium et/ou de bromure d'hydroxyaluminium avec de l'aluminium sous forme de granulés, copeaux et/ou morceaux avec une taille des particules de plus de 2 mm en un excès de plus de 10 fois, sur base de la quantité stoechiométrique nécessaire à la réaction complète en Al₂(OH)₅Cl ou Al₂(OH)₅Br, par chauffage à une température de 90 à 110°C;
(2) de mesure continue de l'hydrogène formé lors de la réaction au moyen d'un dispositif de mesure des gaz, et
(3) d'arrêt de la réaction lorsqu'il s'est formé une quantité d'hydrogène qui correspond à une réaction complète en chlorure et/ou bromure d'hydroxyaluminium, où plus de 70% d'ions hydroxyle et moins de 30% d'ions chlorure et/ou bromure sont liés par aluminium.

2. Procédé suivant la revendication 1, caractérisé en ce que la réaction est arrêtée seulement lorsqu'une réaction complète en un chlorure et/ou bromure d'hydroxyaluminium est réalisée, où 80 à 85% d'ions hydroxyle et 15 à 20% d'ions chlorure et/ou bromure sont liés par aluminium.

3. Procédé suivant les revendications 1 et 2, caractérisé en ce que la réaction complète est déterminée au moyen d'un compteur à gaz par mesure continue de l'hydrogène formé pendant la réaction et la réaction est arrêtée seulement lorsqu'il s'est formé plus de 80%, de préférence plus de 90% d'un chlorure et/ou bromure d'hydroxyaluminium suivant la formule empirique Al₂(OH)₅Cl et/ou Al₂(OH)₅Br.

4. Procédé suivant l'une ou plusieurs des revendications 1 à 3, caractérisé en ce que l'aluminium métallique est utilisé sous forme de granulés, copeaux et/ou morceaux avec une taille moyenne des particules de plus de 3 mm.

5. Procédé suivant l'une ou plusieurs des revendications 1 à 4, caractérisé en ce que l'aluminium métallique est utilisé en un excès de plus de 18 fois, de préférence 20 fois, sur base de la quantité stoechiométrique nécessaire à la réaction.

6. Procédé suivant l'une ou plusieurs des revendications 1 à 5, caractérisé en ce que l'on utilise une solution aqueuse de chlorure d'aluminium et/ou de bromure d'aluminium à 1 à 13%, de préférence 10 à 12%.

7. Procédé suivant l'une ou plusieurs des revendications 1 à 5, caractérisé en ce que l'on utilise une solution aqueuse de chlorure d'hydroxyaluminium et/ou de bromure d'hydroxyaluminium à 1 à 45%, de préférence 10 à 25%.

8. Procédé suivant l'une ou plusieurs des revendications 1 à 7, caractérisé en ce que la solution aqueuse de chlorure d'aluminium et/ou de bromure d'aluminium et/ou de chlorure d'hydroxyaluminium et/ou de bromure d'hydroxyaluminium contenant de l'aluminium métallique est chauffée à une température de 95 à 98°C.

9. Procédé suivant l'une ou plusieurs des revendications 1 à 8, caractérisé en ce que la réalisation du procédé se fait de manière discontinue par le fait que la réaction est arrêtée après qu'une quantité suffisante d'hydrogène s'est formée pour une transformation complète des matières de départ et la solution de chlorure d'hydroxyaluminium et/ou de bromure d'hydroxyaluminium préparée est prélevée du réacteur et le lit subsistant de particules d'aluminium est recyclé pour d'autres réactions.

10. Procédé suivant l'une ou plusieurs des revendications 1 à 9, caractérisé en ce que le chlorure et/ou le bromure d'hydroxyaluminium préparé, de préférence le chlorure et/ou le bromure d'hydroxyaluminium existant comme Al₂(OH)₅Cl et/ou Al₂(OH)₅Br ou contenant plus de 80% de Al₂(OH)₅Cl et/ou Al₂(OH)₅Br, est purifié par filtration, de préférence par microfiltration et ensuite soumis à un séchage par pulvérisation.

11. Procédé suivant l'une ou plusieurs des revendications 1 à 10, caractérisé en ce que la réaction de la solution aqueuse de chlorure d'aluminium et/ou de bromure d'aluminium et/ou la solution aqueuse de chlorure d'hydroxyaluminium et/ou de bromure d'hydroxyaluminium avec l'aluminium métallique est réalisée sous une atmosphère inerte, de préférence sous une atmosphère d'azote.

12. Dispositif de réalisation du procédé suivant les revendications 1 à 11, consistant en un récipient ou réacteur pouvant être chauffé (1), un réservoir (2) pour l'aluminium métallique et un réservoir (4) pour la solution de chlorure d'aluminium et/ou de bromure d'aluminium et/ou la solution de chlorure d'hydroxyaluminium et/ou de bromure d'hydroxyaluminium, où les récipients (2) et (4) sont reliés chacun au réacteur par des conduites, une amenée (6) de gaz inerte ainsi qu'un récipient de réception (15) pour la solution de chlorure d'hydroxyaluminium et/ou de bromure d'hydroxyaluminium préparée, qui se trouve en liaison avec le réacteur (1) par une dérivation, caractérisé en ce que la réacteur (1) est un réacteur à lit fixe dans lequel on place un lit fixe de particules d'aluminium, qui repose à proximité du fond du réacteur sur un chargement en forme de réseau ou tamis (7), de sorte qu'entre le chargement et le fond du réacteur subsiste un espace libre, où la taille de maille du chargement en forme de réseau ou tamis est inférieure à 2 mm, en ce que dans la partie supérieure du réacteur, au-dessus du lit fixe, débouche un tuyau ou tube de conduite (9) par lequel l'hydrogène dégagé est conduit vers un dispositif de mesure des gaz (10) et en ce que la sortie de dégagement présente une taille supérieure à 1/20 du diamètre interne du réacteur, dans la partie inférieure du réacteur.

13. Dispositif suivant la revendication 12, caractérisé en ce que le dispositif de mesure des gaz (10) est un dispositif de mesure d'un volume de gaz et/ou une composition de gaz, de préférence un compteur à gaz.

14. Dispositif suivant les revendications 12 et 13, caractérisé en ce que le dégagement est placé dans le fond du réacteur et est relié à une pompe (12) par un tuyau ou tube de conduite (11).

15. Dispositif suivant l'une ou plusieurs des revendications 12 à 14, caractérisé en ce que, entre la pompe (12) et le récipient de réception (15), est placé un dispositif de filtration (13), de préférence de microfiltration, de la solution de chlorure d'hydroxyaluminium et/ou de bromure d'hydroxyaluminium.

16. Dispositif suivant l'une ou plusieurs des revendications 12 à 15, caractérisé en ce qu'il comprend un séchoir (18), de préférence, un dispositif de séchage par pulvérisation, pour la solution préparée de chlorure d'hydroxyaluminium et/ou de bromure d'hydroxyaluminium.

17. Dispositif suivant l'une ou plusieurs des revendications 12 à 16, caractérisé en ce que le réacteur (1) est un réacteur à double manteau avec un milieu chauffant recyclé, de préférence de la vapeur d'eau.

18. Dispositif suivant l'une ou plusieurs des revendications 12 à 17, caractérisé en ce que le chargement en forme de réseau ou tamis (7) présente une ouverture qui est fermée par un montage en forme de poinçon (8) qui est placé, de manière parallèle à l'axe perpendiculaire du réacteur, au-dessus ou dans l'ouverture et qui débloque ou, selon le cas, ferme cette ouverture par un mouvement ascendant ou descendant.

19. Dispositif suivant l'une ou plusieurs des revendications 12 à 18, caractérisé en ce que le dispositif de mesure des gaz (10) est relié par un circuit de contrôle électrique et/ou électronique avec le dégagement dans le domaine supérieur du réacteur.
